# EUROPÄISCHE PATENTSCHRIFT

(11) **EP 1 529 443 B1**
(45) Veröffentlichungstag und Bekanntmachung des Hinweises auf die Patenterteilung: **01.02.2006**
(21) Anmeldenummer: 03025278.7
(22) Anmeldetag: 06.11.2003
(51) Int. Cl.: A23B 7/16, A23B 7/08, A23B 7/045, A23B 7/154, A23B 7/05, A23L 1/00, A23L 1/212, A23P 1/08, A23L 3/36, A23L 3/37

(54) **Verfahren zum Herstellen von tiefgefrorenen Einzelfrüchten oder einer Mischung aus Früchten sowie tiefgefrorene Einzelfrüchte und eine Mischung aus Früchten**
Deep-frozen fruits or fruit mixture and process of making the same
Procédé de préparation de fruits ou de mélange de fruits surgelés, fruits et mélange de fruits surgelés ainsi obtenus

(43) Veröffentlichungstag der Anmeldung: 11.05.2005
(73) Patentinhaber: Kaufmann, Karin, 56154 Boppard (DE)
(72) Erfinder: Kaufmann, Karin, 56154 Boppard (DE)
(74) Vertreter: Hauck, Graalfs, Wehnert, Döring, Siemons

(56) Entgegenhaltungen:
- EP-A- 0 560 509
- WO-A-95/01778
- DE-A- 19 929 533
- US-A- 3 607 313
- US-A- 3 997 674
- US-A- 4 460 610
- US-B1- 6 265 005
- PATENT ABSTRACTS OF JAPAN vol. 2003, no. 02, 5. Februar 2003 (2003-02-05) & JP 2002 315519 A (INA FOOD IND CO LTD), 29. Oktober 2002 (2002-10-29)

## Beschreibung

Die vorliegende Erfindung betrifft ein Verfahren zum Herstellen von tiefgefrorenen Einzelfrüchten und einer Mischung aus Einzelfrüchten zum Verzehr im aufgetauten Zustand. Die Erfindung betrifft ebenfalls tiefgefrorene Einzelfrüchte sowie die Mischung der Früchte.

Aus DE 199 29 533 A1 ist ein Verfahren zur Herstellung von tiefgefrorenen Einzelfrüchten oder Früchtemischungen bekannt. Bei dem Verfahren werden die Früchte zunächst tiefgefroren und anschließend mit einer Flüssigkeit besprüht. Die Flüssigkeit enthält hierbei eine Zuckerdichte von 40 bis 60 Brix, wodurch die Flüssigkeit eine den Auftrag unterstützende Viskosität erhält. Ferner enthält die Flüssigkeit Zuckerersatzstoffe, die die Früchte aufsüßen. Der Flüssigkeit werden Fruchtsaft oder Fruchtsaftkonzentrat sowie Aromastoffe natürlicher und/oder naturidentischer Art zugesetzt. Die so hergestellten tiefgefrorenen Früchte besitzen im aufgetauten Zustand annähernd Geruch und Geschmack von frischen Früchten.

Aus US 3,607,313 ist ein Verfahren zum Auffrieren einer Beschichtung auf einzelne schnell gefrorene Nahrungsstücke bekannt. Hierbei werden Gemüse oder Früchte mit einer Sauce versehen, wobei die Sauce auf tiefgefrorene Einzelstücke in einer Trommel aufgesprüht wird.

Aus EP 560 509 A1 ist ein Verfahren zur Herstellung von beschichteter Tiefkühlkost bekannt. Bei diesem Verfahren werden die Nahrungsmittel gleichzeitig tiefgefroren und beschichtet, wobei die Beschichtung durch Aufsprühen erfolgt. Die Beschichtung besteht aus Milch, Sahne, Salz, Tomatenpaste, Gewürzen und Stärke.

Der Erfindung liegt die Aufgabe zugrunde, ein Verfahren zur Herstellung von tiefgefrorenen Einzelfrüchten und/oder einer Mischung aus Früchten bereitzustellen, das sicherstellt, daß die Früchte im aufgetauten Zustand von ihrer Beschaffenheit, ihrem Geruch und Geschmack frischen Früchten gleichen.

Erfindungsgemäß wird die Aufgabe durch ein Verfahren mit den Merkmalen aus Anspruch 1 gelöst. Vorteilhafte Ausgestaltungen bilden den Gegenstand der Unteränsprüche 2 bis 12.

Bei dem erfindungsgemäßen Verfahren werden die Früchte zunächst tiefgefroren. Anschließend wird eine vorbestimmte Menge der tiefgefrorenen Früchte abgewogen. Die abgewogene Menge wird nachfolgend einer Verpackung zugeführt. Hierbei legen die Früchte zumindest einen Teil der Strecke unter dem Einfluß der Schwerkraft frei fallend zurück. Die frei fallenden Früchte werden bei dem erfindungsgemäßen Verfahren mit einer vorbestimmten Flüssigkeitsmenge besprüht. Die Flüssigkeit besteht aus einer Mischung, die Fruchtzucker, Fruchtsaft und/oder Fruchtsaftkonzentrat, Süßstoff und Gummi-Arabicum als Zutaten aufweist. Bei dem erfindungsgemäßen Verfahren werden die tiefgefrorenen Früchte im freien Fall mit der Flüssigkeit besprüht, wodurch es möglich ist, die Menge an Flüssigkeit genau zu dosieren. Im Gegensatz zu bekannten Trommelverfahren, bei denen stets Flüssigkeitsreste in der Trommel verbleiben und nicht zu der Beschichtung beitragen, werden bei dem erfindungsgemäßen Verfahren die Früchte in der Vorbeibewegung besprüht. Ferner besitzt die aufgesprühte Flüssigkeit mit ihren Zusammensetzungen aus Fruchtzucker, Fruchtsaft und Süßstoff die Wirkung, daß die Früchte im aufgetauten Zustand eine ausreichende Süße besitzen und die durch das Tieffrieren zerstörte Süße substituiert wird. Das Gummi-Arabicum bewirkt, daß die Früchte im tiefgefrorenen Zustand mit der aufgefrorenen Beschichtung nicht langer spröde und zerbrechlich sind, sondern ohne Beschädigung und Zerbrechen transportiert und gelagert werden können.

In einer bevorzugten Wetterführung des erfindungsgemäßen Verfahrens wird der Flüssigkeit zusätzlich noch ein gewisser Anteil an Calcium zugesetzt. Das Calcium dringt aufgrund des Konzentrationsgefälles während des Auftauvorgangs in die Früchte ein und bewirkt eine Stabilisierung der Zellstruktur, wodurch die aufgetauten Früchte annähernd die Konsistenz von frischen Früchten besitzen.

Um im aufgetauten Zustand einen nahezu naturidentischen Geschmack zu erhalten, können der Flüssigkeit zusätzlich Aromastoffe natürlicher oder naturidentischer Art zugesetzt werden.

Es hat sich herausgestellt, daß bei einem Besprühen mit 2 bis 10 Gew.-% Flüssigkeit bezogen auf das Gesamtgewicht der besprühten Früchte, also 90 bis 98 Gew.% Fruchtanteil, die Früchte im aufgetauten Zustand ein ansprechendes Äußeres besitzen, das auch nach dem Transport und der Lagerung nicht durch beschädigte, zerbrochene oder eingedrückte Früchte gestört wird. Bevorzugt beträgt die Flüssigkeitsmenge 5 bis 9 Gew.-%.

Das erfindungsgemäße Verfahren eignet sich für beliebige Früchte und/oder besonders für Beeren, insbesondere für Himbeeren. Himbeeren sind besonders empfindliche Früchte, die im tiefgefrorenen Zustand schnell beschädigt werden und bei Auftauen dazu neigen, pappig und matschig zu werden. Die besondere Empfindlichkeit bei Himbeeren liegt darin begründet, daß diese einen Hohlraum umschließen, der eingedrückt werden kann. Erst mit dem erfindungsgemäßen Verfahren besitzen auch Himbeeren im aufgetauten Zustand eine gute Qualität. Dies liegt mit daran, daß durch die Verwendung von Gummi-Arabium die tiefgefrorenen Himbeeren beweglich sind und ein Eindrücken des Hohlraums vermieden wird.

Zweckmäßigerweise erfolgt der Sprühvorgang für eine vorbestimmte Zeitdauer, während der die Früchte an einer oder mehreren Sprühdüsen vorbeifallen. Wichtig hierbei ist, daß die Früchte nach Möglichkeit weitgehend als Einzelfrüchte herunterfallen und nicht in einem Konglomerat von aneinander haftenden Früchten besprüht werden. Bevorzugt wird während der Zeitdauer, in der die Früchte sich an den Sprühdüsen vorbeibewegen mit einer zeitlich sich ändernden Dosiermenge und Sprühintensität gesprüht. Hierdurch kann sichergestellt werden, daß der Sprühvorgang gemäß Menge und Stärke entsprechend einer durchschnittlichen Verteilung der fallenden Früchte erfolgt.

Um die Beschichtung elastischer auszugestalten und deren Sprödigkeit zu vermeiden, hat es sich als besonders vorteilhaft herausgestellt, ungefähr 5 bis 23 Gew.-% Gummi-Arabicum in der Flüssigkeit vorzusehen. Bevorzugt werden 12 bis 16% Gummi-Arabicum der Flüssigkeit zugesetzt.

Um eine Anhaftung der Früchte zu vermeiden und eine möglichst gleichmäßige Beschichtung zu erlangen, erfolgt das Besprühen kurz nach dem Abwiegen, so daß ein Antauen der Oberfläche vermieden wird.

Die erfindungsgemäße Aufgabe wird ebenfalls durch tiefgefrorene Einzelfrüchte oder Mischungen aus Früchten gemäß Anspruch 13 gelöst. Eine vorteilhafte Ausgestaltung bildet den Gegenstand von Anspruch 14.

Die erfindungsgemäßen, tiefgefrorenen Einzelfrüchte oder die Mischung aus Früchten zum Verzehr im aufgetauten Zustand besitzt einen Überzug aus gefrorener Flüssigkeit, die Fruchtzucker, Fruchtsaft und/oder Fruchtsaftkonzentrat, Süßstoff und Gummi-Arabicum enthält. Vorteilhafterweise besitzt der Überzug auch Calcium, das die Früchte beim Auftauvorgang stabilisiert.

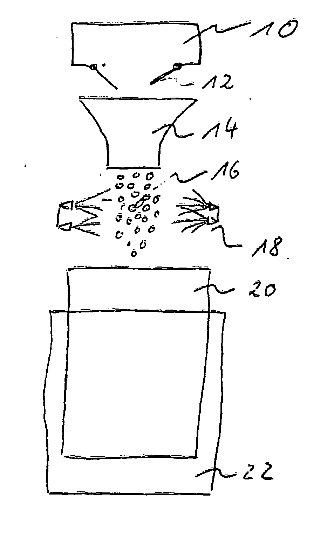

Das erfindungsgemäße Verfahren wird nachfolgend anhand einer Figur näher erläutert. Die Figur zeigt einen Sammelbehälter 10 für eine abgehobene Menge an tiefgefrorenen Himbeeren. Nach Öffnen einer Klappe 12 am Boden des Sammelbehälters 10 fallen die Himbeeren durch einen Trichter 14. Die durch den Trichter 14 gefallenen Himbeeren 16 werden im freien Fall von seitlich angeordneten Sprühdüsen 18 besprüht. Die besprühten Himbeeren fallen in ein Formrohr 20 einer Schlauchbeutelmaschine. Durch das Formrohr 20 hindurch gelangen die Himbeeren in einen als Verpackung dienenden Schlauchbeutel 22. Die Strecke für den freien Fall der Himbeeren beträgt ungefähr 1 bis 2 m. Um den Aufprall der Himbeeren in den Schlauchbeutel 22 etwas zu dämpfen, ist es möglich, den Schlauchbeutel während des Auftreffens der Himbeeren nach unten zu bewegen.

Die tiefgefrorenen Himbeeren besitzen eine Temperatur von ungefähr -25°C bis -28°C, während des Sprühvorgangs besitzen die Himbeeren eine Temperatur von ungefähr -16°C bis -24°C. Nach dem Sprühvorgang werden die Himbeeren wieder auf eine Temperatur von -25°C bis -28°C gebracht.

Ein Beispiel für die erfindungsgemäße Flüssigkeit auf Basis von Wasser ist:

| | |
|---|---|
| Fruchtzuckersirup: | 44,8 Gew.-%, |
| Fruchtsaftkonzentrat: | 8,9 Gew.-%, |
| Süßstoff: | 0,42 Gew.-%, |
| Calcium: | 6 Gew.-%, |
| Gummi-Arabicum: | 14 Gew.-%. |

Der Flüssigkeit sind noch Aromen natürlicher oder naturidentischer Art zugesetzt. Das Fruchtsaftkonzentrat besitzt eine Zuckerkonzentration von ungefähr 56 Brix und ergibt 100% einfachen Fruchtsaft in der Flüssigkeit. Als Süßstoff werden Zyklamat und Saccharin verwendet.

## Patentansprüche

1. Verfahren zur Herstellung von tiefgefrorenen Einzelfrüchten und einer Mischung aus Früchten zum Verzehr im aufgetauten Zustand, das die folgenden Verfahrensschritte aufweist:
- die Früchte werden tiefgefroren,
- anschließend wird eine vorbestimmte Menge der Früchte abgewogen,
- die Früchte werden frei fallend einer Verpackung zugeführt, wobei die fallenden Früchte mit einer vorbestimmten Menge einer Flüssigkeit besprüht werden, die eine Mischung folgender Inhaltsstoffe aufweist: Fruchtzucker, Fruchtsaft und/öder Fruchtsaftkonzentrat, Süßstoff und Gummi-Arabicum.

2. Verfahren nach Anspruch 1, **dadurch gekennzeichnet, daß** die Flüssigkeit zusätzlich Calcium enthält.

3. Verfahren nach Anspruch 1 oder 2, **dadurch gekennzeichnet, daß** die Flüssigkeit zusätzlich Aromastoffe enthält.

4. Verfahren nach einem der Ansprüche 1 bis 3, **dadurch gekennzeichnet, daß**, bezogen auf das Gesamtgewicht der besprühten Früchte, die Flüssigkeit in einer Menge von 2 bis 10 Gew.-% aufgesprüht wird.

5. Verfahren nach einem der Ansprüche 1 bis 4, **dadurch gekennzeichnet, daß**, bezogen auf das Gesamtgewicht der besprühten Früchte, die Flüssigkeit in einer Menge von 5 bis 9 Gew.-% aufgesprüht wird.

6. Verfahren nach einem der Ansprüche 1 bis 5, **dadurch gekennzeichnet, daß** beliebige Früchte und/oder Beeren, insbesondere Himbeeren verwendet werden.

7. Verfahren nach einem der Ansprüche 1 bis 6, **dadurch gekennzeichnet, daß** der Sprühvorgang für eine vorbestimmte Zeitdauer erfolgt, während der die Früchte an einer oder mehreren Sprühdüsen (18) vörbeifallen.

8. Verfahren nach Anspruch 7, **dadurch gekennzeichnet, daß** während der Zeitdauer Dosiermenge und/oder Sprühintensität der Flüssigkeit einen vorbestimmten Verlauf besitzen.

9. Verfahren nach einem der Ansprüche 1 bis 8, **dadurch gekennzeichnet, daß** die Flüssigkeit 5 bis 23 Gew.% Gummi-Arabicum enthält.

10. Verfahren nach Anspruch 9, **dadurch gekennzeichnet, daß** die Flüssigkeit 12 bis 16 Gew.-% Gummi-Arabicum enthält.

11. Verfahren nach einem der Ansprüche 1 bis 10, **dadurch gekennzeichnet, daß** die Flüssigkeit ungefähr folgende Zusammensetzung aufweist:
| | |
|---|---|
| Fruchtzuckersirup: | 44,8 Gew.-% |
| Fruchtsaftkonzentrat: | 8,9 Gew.-% |
| Süßstoff: | 0,42 Gew.-% |
| Calcium: | 6 Gew.-% |
| Gummi-Arabicum: | 14 Gew.-%, |
wobei die verbleibenden Gewichtsanteile Wasser und Aromastoffe sind.

12. Verfahren nach einem der Ansprüche 1 bis 11, **dadurch gekennzeichnet, daß** die Früchte kurz nach dem Abwiegen besprüht werden derart, daß ein Auftauen vermieden wird.

13. Tiefgefrorene Einzelfrüchte oder Mischungen aus Früchten zum Verzehr im aufgetauten Zustand, wobei die Früchte einen aus gefrorener Flüssigkeit bestehenden Überzug aufweisen, der Fruchtzucker, Fruchtsaft und/oder Fruchtsaftkonzentrat, Süßstoff und Gummi-Arabicum enthält.

14. Einzelfrüchte öder Mischungen aus Früchten nach Anspruch 13, **dadurch gekennzeichnet, daß** der Überzug zusätzlich Calcium enthält.

## Claims

1. A method for the production of deep-frozen simple fruits and fruit mixtures for consumption in defrosted state which comprises the following procedure steps:
- the fruits are deep-frozen,
- then a predetermined quantity of the fruits is weighed,
- the fruits are added to a package while free falling, wherein the falling fruits are sprayed with a predetermined quantity of a liquid which comprises a mixture of the following ingredients:
Fructose, fruit juice and/or fruit juice concentrate, sweetening agents and gum arabic.

2. The method according to Claim 1, **characterized in that** the liquid additionally contains calcium.

3. The method according to Claim 1 or Claim 2, **characterized in that** the liquid additionally contains flavoring agents.

4. The method according to any one of Claims 1 through 3, **characterized in that**, related to the total weight of the sprayed fruits, the liquid is sprayed in a quantity ranging from 2 to 10 percent by weight.

5. The method according to any one of Claims 1 through 4, **characterized in that**, related to the total weight of the sprayed fruits, the liquid is sprayed in a quantity ranging from 5 to 9 percent by weight.

6. The method according to any one of Claims 1 through 5, **characterized in that** random fruits and/or berries are used, in particular raspberries.

7. The method according to any one of Claims 1 through 6, **characterized in that** the spraying operation takes place for a predetermined time period, during which the fruits fall past one or more spraying nozzles (18).

8. The method according to Claim 7, **characterized in that** during the time period the dosing quantity and/or spraying intensity of the liquid have a predetermined distribution.

9. The method according to any one of Claims 1 through 8, **characterized in that** the liquid contains 5 to 23 percent by weight gum arabic.

10. The method according to Claim 9, **characterized in that** the liquid contains 12 to 16 percent by weight gum arabic.

11. The method according to any one of Claims 1 through 10, **characterized in that** the liquid exhibits roughly the following composition:
| | |
|---|---|
| Fructose syrup: | 44.8 percent by weight |
| Fruit juice concentrate: | 8.9 percent by weight |
| Sweetening agents: | 0.42 percent by weight |
| Calcium: | 6 percent by weight |
| Gum arabic: | 14 percent by weight |
wherein the remaining weight content is water and flavoring agents.

12. The method according to any one of Claims 1 through 11, **characterized in that** the fruits are sprayed shortly after the weighing in such a way that a defrosting is prevented.

13. Deep-frozen simple fruits or fruit mixtures for consumption in defrosted state wherein the fruits exhibit a coating consisting of frozen liquid containing fructose, fruit juice and/or fruit juice concentrate, sweetening agents and gum arabic.

14. Simple fruits or fruit mixtures according to Claim 13, **characterized in that** the coating additionally contains calcium.

## Revendications

1. Procédé de préparation de fruits surgelés et d'un mélange de fruits à consommer à l'état décongelé, procédé qui comporte les étapes suivantes de procédé :
- les fruits sont surgelés,
- ensuite, une quantité prédéfinie de fruits est pesée,
- les fruits sont introduits en chute libre dans un emballage, les fruits tombant étant pulvérisés avec une quantité prédéfinie d'un liquide, qui comporte un mélange des substances suivantes : fructose, jus de fruits et/ou concentré de jus de fruits, édulcorant et gomme arabique.

2. Procédé selon la revendication 1, **caractérisé en ce que** le liquide contient de plus du calcium.

3. Procédé selon l'une des revendications 1 ou 2, **caractérisé en ce que** le liquide contient en outre des arômes.

4. Procédé selon l'une des revendications 1 à 3, **caractérisé en ce que**, par rapport au poids total des fruits pulvérisés, le liquide est pulvérisé dans une quantité de 2 à 10 % en poids.

5. Procédé selon l'une des revendications 1 à 4, **caractérisé en ce que** par rapport au poids total des fruits pulvérisés, le liquide est pulvérisé dans une quantité de 5 à 9 % en poids.

6. Procédé selon l'une des revendications 1 à 5, **caractérisé en ce que** n'importe quels fruits et/ou baies, en particulier des framboises, sont utilisés.

7. Procédé selon l'une des revendications 1 à 6, **caractérisé en ce que** le processus de pulvérisation s'opère pendant une durée prédéterminée, pendant laquelle les fruits tombent en passant à côté d'une ou plusieurs buses de pulvérisation (18).

8. Procédé selon la revendication 7, **caractérisé en ce que** pendant la durée, quantité de dosage et/ou intensité de pulvérisation du liquide ont un déroulement déterminé.

9. Procédé selon l'une des revendications 1 à 8, **caractérisé en ce que** le liquide contient 5 à 23 % en poids de gomme arabique.

10. Procédé selon la revendication 9, **caractérisé en ce que** le liquide contient 12 à 16 % en poids de gomme arabique.

11. Procédé selon l'une des revendications 1 à 10, **caractérisé en ce que** le liquide comporte approximativement la composition suivante :
| | |
|---|---|
| sirop de fructose : | 44,8 % en poids |
| concentré de jus de fruits : | 8,9 % en poids |
| édulcorant : | 0,42 % en poids |
| calcium : | 6 % en poids |
| gomme arabique : | 14 % en poids, |
les pourcentages en poids restants étant de l'eau et des arômes.

12. Procédé selon l'une des revendications 1 à 11, **caractérisé en ce que** les fruits sont pulvérisés peu de temps après le pesage si bien qu'une décongélation est évitée.

13. Fruits ou mélanges de fruits surgelés à consommer à l'état décongelé, les fruits comportant une couche se composant de liquide gelé, qui contient du fructose, du jus de fruits et/ou du concentré de jus de fruits, de l'édulcorant et de la gomme arabique.

14. Fruits ou mélanges de fruits selon la revendication 13, **caractérisé en ce que** la couche contient en outre du calcium.
